# EUROPEAN PATENT SPECIFICATION

(11) **EP 1 169 387 B1**
(45) Date of publication and mention of the grant of the patent: **12.03.2003**
(21) Application number: 00931057.4
(22) Date of filing: 06.04.2000
(51) Int. Cl.: C08L 5/08, C08J 9/28, C08J 3/14, D01F 9/00

(54) **THREE-DIMENSIONAL STRUCTURES CONTAINING HYALURONIC ACID DERIVATIVES OBTAINED BY THE SUPERCRITICAL ANTISOLVENT TECHNIQUE**
DREIDIMENSIONALE STRUKTUR ENTHALTEND HYALURONSÄUREDERIVAT, HERGESTELLT DURCH DIE TECHNIK VON SUPERKRITISCHEN ANTILÖSUNGSMITTELN
STRUCTURES TRIDIMENSIONNELLES CONTENANT DES DERIVES D'ACIDE HYALURONIQUE OBTENUES PAR PRECIPITATION INDUITE PAR UN ANTI-SOLVANT SUPERCRITIQUE

(30) Priority: 08.04.1999 IT PD990071
(43) Date of publication of application: 09.01.2002
(73) Proprietor: FIDIA ADVANCED BIOPOLYMERS S.R.L., 35031 Abano Terme (Padova) (IT)
(72) Inventor: PALLADO, Paolo, I-35132 Padova (IT); BAGGIO, Marco, I-31029 Vittorio Veneto (IT); DALLE CARBONARE, Maurizio, I-35100 Padova (IT); CALLEGARO, Lanfranco, I-36016 Thiene (IT)
(74) Representative: Bianchetti, Giuseppe, Prof.
(86) International application number: PCT/EP00/03081
(87) International publication number: WO 00/061675

(56) References cited:
- WO-A-96/29998
- US-A- 5 833 891
- LUCA BENEDETTI ET AL.: "Production of micronic particles of biocompatible polymer using supercritical carbon dioxide" BIOTECHNOLOGY AND BIOENGINEERING, vol. 53, 1997, pages 232-237, XP000929895

## Description

The present invention concerns biocompatible and biodegradable, three-dimensional structures containing hyaluronic acid derivatives obtained by the technique of precipitation induced by supercritical antisolvent (SAS), and their use in the field of medicine and surgery.

Hyaluronic acid is a heteropolysaccharide composed of alternating residues of D-glucuronic acid and N-acetyl-D-glycosamine. It is a straight-chained polymer with a molecular weight that varies between 50,000 and 13,000,000 Da according to the source from which it is obtained and the methods of preparation and determination used. It is naturally present in the pericellular gels, in the fundamental substance of connective tissue of vertebrate organisms, of which it is one of the chief components, in the synovial fluid of joints, in the vitreous humor, in human umbilical cord tissues and in rooster combs.

Hyaluronic acid plays a vital role in many biological processes such as tissue hydration, proteoglycan organisation, cell differentiation, proliferation and angiogenesis (J. Aigner et al., L. Biomed. Mater. Res. 1998, 42, 172-181).

It is known that hyaluronic acid fractions can be used to facilitate tissue repair, as substitutes for the intraocular fluid, or they can be administered by the intra-articular route to treat joint pathologies, as described in European Patents No.s 0138572 and 0535200.

Hyaluronic acid plays a fundamental role in the tissue repair process, especially in the early stages of granulation, stabilising the coagulation matrix and controlling its degradation, favouring the recruitment of inflammatory cells such as polymorphonucleate leukocytes and monocytes, of mesenchymal cells such as fibroblasts and endothelial cells and, lastly, orientating the successful migration of epithelial cells.

It is known that the application of hyaluronic acid solutions is able to accelerate healing in patients suffering from sores, wounds and burns. The role of hyaluronic acid in the various stages of the tissue repair process has been described by the construction of a theoretical model by Weigel, P. H. et al.: "A model for the role of hyaluronic acid and fibrin in the early events during the inflammatory response and wound healing", *J. Theor: Biol:*, 119, 219, 1986.

The use of low-molecular-weight hyaluronic acid fractions for the preparation of pharmaceutical compositions with bone-inducing properties (US 5,646,129) is also known.

Hyaluronic acid derivatives maintain all the properties of the above glycosaminoglycan, with the advantage that they can be processed in various forms and that their solubility and degradation times can be varied according to the percentage of their derivation (EP 0216453 B1).

Moreover, hyaluronic acid derivatives have the advantage of new properties due to the insertion of specific molecules into the structure of hyaluronic acid. For example, the sulfated derivatives of hyaluronic acid present anticoagulant properties and are resistant to hyaluronidase (WO 95/25751).

Also known are the total or partial esters of hyaluronic acid and the autocrosslinked derivatives of hyaluronic acid, their use in the pharmaceutical and cosmetic fields and in that of biodegradable materials (US Patents No.s 4,851,521; 4,965,353; 5,676,964).

As we said previously, hyaluronic acid derivatives can be processed in various forms such as films, threads, sponges, microspheres and nanospheres.

The processes known to date for the production of said forms involve the use of solvents that then have to be removed from the final product in the case of materials for use in the pharmaceutical field, but which are difficult to remove and require repeated washings.

Indeed, as described in European Patent No. 0216453 by the Applicant, the hyaluronic acid derivative is dissolved in a solvent such as, for example, dimethylsulfoxide and the solution thus obtained is spread evenly over a glass plate, or passed through a spinneret, to obtain a film or threads, respectively. The latter can then be immersed in an antisolvent such as, for example, ethanol so as to remove the dimethylsulfoxide, and washed repeatedly with the antisolvent used.

The process for the preparation of sponges, on the other hand, involves adding a mixture constituted by salts to the solution of hyaluronic acid derivative. Such salts are, for example, sodium chloride of a given particle size, and certain compounds such as, for example, bicarbonate of soda and citric acid, able to release gas such as, for example, carbon dioxide when they come into contact with the solvent for the hyaluronic acid derivative.

The paste that is obtained is passed through rollers so as to obtain a sheet of product of a given thickness, which is then immersed and washed repeatedly with a suitable antisolvent such as water.

By using an innovative technique which is still known by its original name of 'supercritical', it is possible to limit the use of organic solvents, reduce the number of steps required to obtain the finished or semifinished product, and reduce the organic solvent content to very low levels.

When using supercritical technology, it is well known that the antisolvent effect used to obtain the segregation of a solute from a solution can be triggered by insufflating an antisolvent that, in normal conditions, is in the form of a gas or vapour, but not a liquid.

This process, known as SAS, involves delivering the antisolvent under pressure into the liquid solution, which expands due to the effect of the solubilisation of the antisolvent in liquid phase. The SAS technique can be performed by various methods, two important ones being the discontinuous, or batch, process and the continuous process.

### Discontinuous SAS process

The discontinuous SAS technique consists in placing a solution containing the solute to be precipitated in contact with compressed antisolvent, liquid, vapour or gas. The solution is loaded into a pressure-resistant container and the gas is blown into it under pressure until the solute separates from the liquid phase. A flow of the same antisolvent fluid is then used to eliminate the solvent and obtain a pure precipitate.

The first reported attempts to apply the discontinuous SAS process were performed by P. M. Gallagher et al. (Johnston, K. P., Penninger, J. M. L., Supercritical fluids science and technology, ACS Symp. Ser. 406, Chap. 22, 1989) for the crystallisation of explosive substances such as nitroguanidine.

Lastly, the discontinuous SAS technique has been applied in the preparation of nanospheres containing hyaluronic acid derivatives and having a mean diameter of less than 1 micron (WO96/29998).

### Continuous SAS technique

According to the continuous technique, the solution is injected continuously with antisolvent in the pressurised precipitator, through a calibrated opening and by means of a volumetric pump. The continuous technique has interesting advantages over the discontinuous process, both for its better working conditions and for the fact that certain limitations that are intrinsic to the discontinuous process are overcome.

The first publication on the SAS technique was by Yeo et al. (Biotechnology and Bioengineering, 41, 341-346, 1993) who performed the precipitation of insulin.

Tom et al.(Application of Supercritical Fluids in the controlled release of drugs, chapter 19, 1993) used the continuous SAS system to produce the precipitation of two different proteins.

Like the discontinuous SAS process, the continuous technique too has been investigated as a possible separation technique. An interesting paper on this topic is one by Foster et al. (The 4^{th} International Symposium on Supercritical Fluids, Sendai, Japan, 27-29, 1997).

The Applicant has found, surprisingly, that by using the SAS technique, continuous or discontinuous, it is possible to process hyaluronic derivatives in various forms such as films, sponges and threads, and to solve the problem of eliminating residues of organic solvent which was a drawback to the processes used to date.

The absence of solvents in the final products represents a considerable advantage for the biomaterials to be used in the field of medicine and surgery, because there is thus a drastic decrease in toxicity compared to the same products obtained by conventional techniques, as well as a marked improvement in cell growth in cultures grown on scaffolds made of the biomaterials.

Moreover, it has, surprisingly, been found that the sponges obtained by the discontinuous SAS process present a morphological structure that is very similar to bone structure and that it can therefore be used per se or in association with a suitable cell culture for bone regeneration or in the treatment of osteochondral defects.

Lastly, it has, surprisingly, been found that it is possible, by the SAS technique, to obtain threads containing partial esters of hyaluronic acid that are water-soluble and cannot be obtained by the conventional processes because the solubility of the derivatives results in the structures that are obtained being non-continuous, agglomerated, lacking reproducibility, while the working conditions cannot be used on an industrial scale.

### DETAILED DESCRIPTION OF THE INVENTION

The present invention describes biocompatible and biodegradable, three-dimensional structures in the form of sponges, gels, fibres, threads, tubes, non-woven fabrics, cords, meshes containing hyaluronic acid derivatives, obtainable by precipitation induced by supercritical antisolvent from a solution of hyaluronic acid derivative in an aprotic solvent at a concentration of between 2% w/w and the saturation value at a temperature of 40°C, said concentration being selected so as to exceed the concentration threshold in which the polymer is present in form of a network structure, optionally in association with pharmacologically or biologically active substances and with other natural, semisynthetic and synthetic polymers, and their use in the medical and surgical field.

Preference should be given to the following hyaluronic derivatives:
- esters of hyaluronic acid wherein part or all of the carboxy functions are esterified with alcohols of the aliphatic, aromatic, arylaliphatic, cycloaliphatic, heterocyclic series (EP 0216453);
- esters of hyaluronic acid wherein the first part of the carboxy functions is esterified with straight, long-chained araliphatic alcohols with between 10 and 22 carbon atoms (WO 98/08876);
- autocrosslinked esters of hyaluronic acid wherein part or all of the carboxy groups are esterified with alcoholic functions of the same polysaccharide chain or other chains (EP 0341745 B1);
- crosslinked compounds of hyaluronic acid wherein part or all of the carboxy groups are esterified with polyalcohols of the aliphatic, aromatic, arylaliphatic, cycloaliphatic, heterocyclic series, generating crosslinking by means of spacer chains(EP 0265116 B1);
- the hemiesters of succinic acid or heavy metal salts of the hemiester of succinic acid with hyaluronic acid or with partial or total esters of hyaluronic acid (WO 96/357207);
- the sulfated derivatives (WO 95/25751) or N-sulfated derivatives (WO 98/45335);
- the amide derivatives of hyaluronic acid.

The preferred partial ester derivatives of hyaluronic acid are those with less than 90% of esterification, in particular those within a range of between 45 and 76% of esterification, and even more preferably between 60 and 70% esterification.

The hyaluronic acid derivatives esterified with benzyl alcohol are also to be preferred.

The above mentioned hyaluronic acid derivatives may be used alone, in association with each other or with natural, semisynthetic or synthetic polymers.

Natural polymers that can be used are, for example, collagen, coprecipitates of collagen and glycosaminoglycans, cellulose, polysaccharides in the form of gels such as chitin, chitosan, pectin or pectic acid, agar, agarose, xanthan, gellan, alginic acid or alginates, polymannans or polyglycans, starch or natural gums. The semisynthetic polymers, for example, can be chosen from the group composed of collagen crosslinked with agents such as aldehydes or precursors of the same, dicarboxylic acid or halides thereof, diamines, derivatives of cellulose, hyaluronic acid, chitin or chitosan, gellan, xanthan, pectin or pectic acid, polyglycans, polymannan, agar, agarose, natural gums or glycosaminoglycans. Lastly, synthetic polymers that can be used are, for example, polylactic acid, polyglycolic acid or copolymers of the same or of their derivatives, polydioxanes, polyphosphazenes, polysulfone resins and polyurethane resins, PTFE.

The three-dimensional structures according to the present invention can contain pharmaceutically or biologically active substances such as, for example, antiinflammatory agents, antibiotics, growth factors such as, for example, bone morphogenic protein (BMP), human Nerve Growth Factor (h-NGF), ciliary neuronotrophic factor.

The hyaluronic acid derivatives in the form of fibres or films can be further processed in the form of non-woven fabric, cords, meshes.

Said biomaterials may be used to advantage as scaffolds for cell cultures, in plastic and aesthetic surgery, in orthopaedics, in dentistry, in neurosurgery, in cardiovascular surgery, in the prevention of post-surgical adherences, for the regeneration of tissues such as epidermal, dermal, bone, cartilage, nerve, cardiovascular, adipose, hepatic, muscular, glandular tissues, and in general as a filler for the soft tissues in cases of loss of substance.

In particular, the sponges obtained by the discontinuous SAS process present a morphological structure that is very similar to bone structure and can therefore be used per se or in association with a suitable cell culture for bone regeneration or in treatment for osteochondral defects.

We report hereafter some examples of preparations of sponges and threads prepared by the discontinuous and continuous SAS techniques respectively.

The process to prepare sponges by discontinuous SAS technique can be summarised by the following steps:
a) dissolving the hyaluronic acid derivative in an aprotic solvent at a concentration of between 2% w/w and the saturation value at a temperature of 40°C;
b) loading the solution from step a) into a pressure-resistant container;
c) loading the antisolvent until a pressure greater than that of precipitation is reached (depending upon the organic solvent used and the temperature) at a temperature of between 10 and 70°C;
d) removing the aprotic solvent with the flow of antisolvent;
e) depressurising the container and harvesting the precipitate;

As regards the process of preparing threads, the continuous SAS technique summarised below is applied:
a) dissolving the hyaluronic acid derivative in an aprotic solvent at a concentration of between 2% w/w and the saturation value at a temperature of 40°C;
b) loading the solution into the syringe pump;
c) loading the antisolvent to a pressure greater than that of precipitation (depending on the organic solvent used and the temperature), at a temperature of between 10 and 70°C and stabilising the flow of antisolvent;
d) injecting continuously the solution of hyaluronic acid derivative into the precipitator through a calibrated opening with a diameter of between 40 and 400 micron;
e) stopping injection of the solution;
f) removing any residue solvent with the flow of antisolvent;
g) depressurising the precipitator and harvesting the precipitate.

### EXAMPLE 1

### Preparation of sponges constituted by the total benzyl ester of hyaluronic acid (HYAFF11)

### Preliminary remarks

The SAS technology has been applied to concentrated solutions of Hyaff-11 and it has been found that the morphology of the precipitate is affected by the initial concentration of the solution and by the working conditions. This fact is no predictable in theory. The optimisation of such parameters has surprisingly allowed to obtain the polymer in the form of a porous sponge having a strcture very similar to the bone structure.

The variants which are to be worked upon in order to diversify the product are the working temperature and pressure, the initial concentration of the solution, the type of organic solvent and gaseous antisolvent, as well as the pressure gradient employed during the pressurisation step.

According to the invention, the aprotic solvent can be dimethylsulfoxide, N-methylpirrolidone or dimethylformamide. The antisolvent can be carbon dioxide, a hydrocarbon, a hydrofluorocarbon or nitrous oxide.

Preferably, the antisolvent is loaded at a speed or pressure gradient of 0,1 to 20 bar/min, until a pressure of 40 to 150 bas is reached.

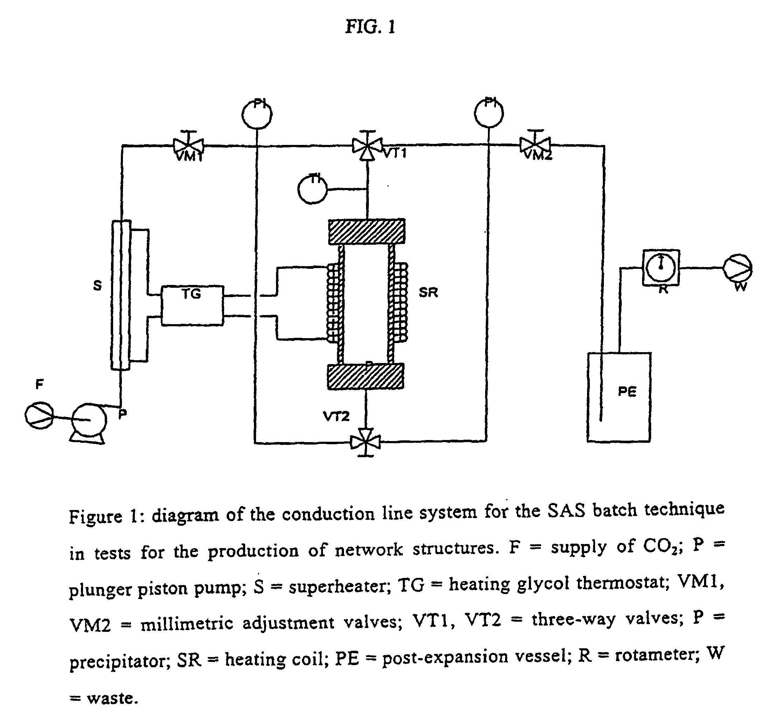

Figure 1 shows a diagram of the equipment used.

Precipitation tank P is connected to the equipment so that the CO₂ can flow both upwards and downwards, by adjusting the three-way valves VT1 and VT2.

At each of the two extremities is fitted a filter/distributor formed by porous metal baffles (frits), with a mean pore diameter of 5 µm, fixed by means of two steel rings that press them into position on two teflon rings. The flow of CO₂ is thus distributed evenly throughout the volume of the tank and the mass present therein.

A highly concentrated solution of totally esterified Hyaff-11 in DMSO is prepared. The high concentration of the starting solution requires the polymer to be added to the solvent very slowly, while it is agitated and heated. The solution thus obtained is very viscous. It is left to be agitated but without further heating for 12 hours.

The liquid is then poured into the precipitator, which is then closed. The temperature is set by means of the thermostat gauge (TG).

Once the required temperature has been reached, the pressure in the container must be regulated. The pressure is kept at the desired value by means of the millimetric valve (VM1). During loading, the three-way valves are set to allow an upward flow so that the CO₂ can bubble into the solution.

Loading of the vessel ends at a pressure value greater than that of precipitation, depending upon the solvent and on the temperature. At this point the flow is inverted by switching the three-way valves VT1 and VT2, and the millimetric valve VM2 is opened, siphoning off the solvent present in the precipitator. The purification step is thus speeded up, reducing the volume of DMSO to be stripped out with the flow of CO₂.

Siphoning is followed by a second step of pressurisation to increase the solubility of the organic solvent in the supercritical phase.

The precipitate is then purified, supplying CO₂ according to the flow valve values and for a period of time that depends upon the volume of the system and the quantity of solution used.

The second pressurisation step and purification are again performed with the flow of CO₂ directed upwards.

After the time necessary to eliminate the solvent, the pump, P, is stopped and the precipitator is adjusted to atmospheric pressure. At this point it can be disconnected from the system, opened, and the precipitate can be harvested.

### Results

Preliminary tests were performed starting from solutions with various concentrations to determine the conditions of the passage from a solution in which the polymer is present in the form of rolls to one in which the polymer chains are entangled in a network structure (precipitation threshold).

Our analysis led us to conclude that, to obtain a spongy structure with good mechanical characteristics of resistance to pressure and traction, it was necessary to operate at concentrations higher than the overlap threshold.

Table 1 shows the working conditions observed in the course of the preliminary tests.

**Table 1:**

| working conditions in the process for the production of sponges starting from hyaluronic acid derivatives (HYAFF11 in DMSO) by the SAS technique. | | | | |
|---|---|---|---|---|
| **TEST** | Temperature (°C) | Pressure (bar) | Starting concentration (%w/w) | Result |
| 1 | 40 | 90 | 5 | Powder |
| 2 | 40 | 90 | 8 | Non-compact network |
| 3 | 40 | 90 | 10 | Sponge |
| 4 | 40 | 90 | 12 | sponge |

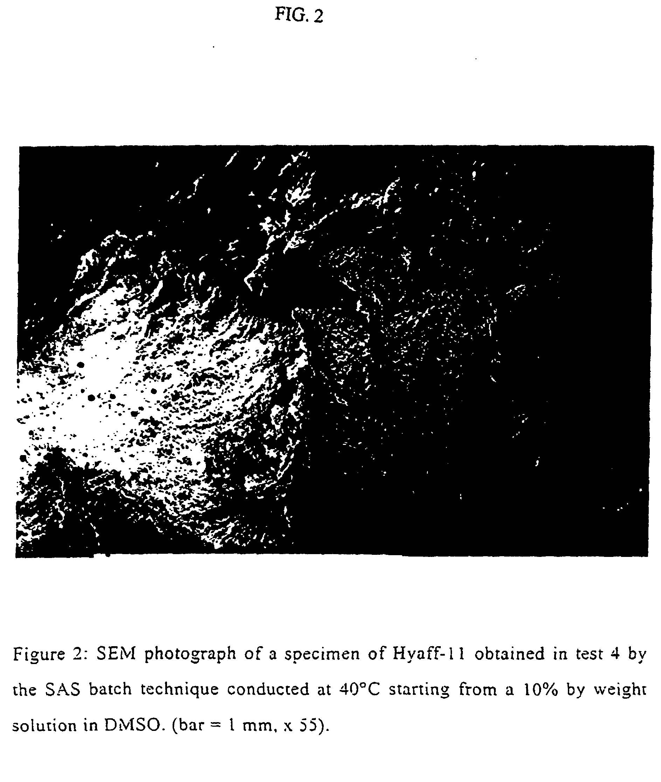

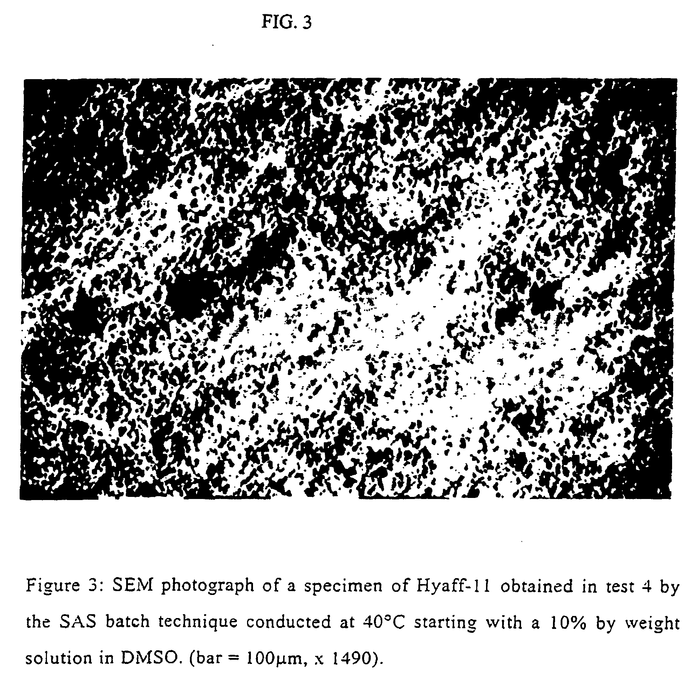

Figures 2 and 3 show SEM photographs of a specimen of sponge obtained in test 4.

Figure 2 is not greatly enlarged and it is possible to observe the compact and homogeneous structure that has been produced.

Conversely, the photograph in Figure 3 shows the porosity of the sponge, the mean dimensions of which are in the range of just a few microns.

It has therefore been demonstrated that it is possible to produce network structures of Hyaff-11 using the batch SAS technique, starting from concentrated solutions, according to the solubility limits of the system.

### EXAMPLE 2

### Preparation of threads constituted by the benzyl ester of hyaluronic acid with 50% esterification (HYAFF11p50)

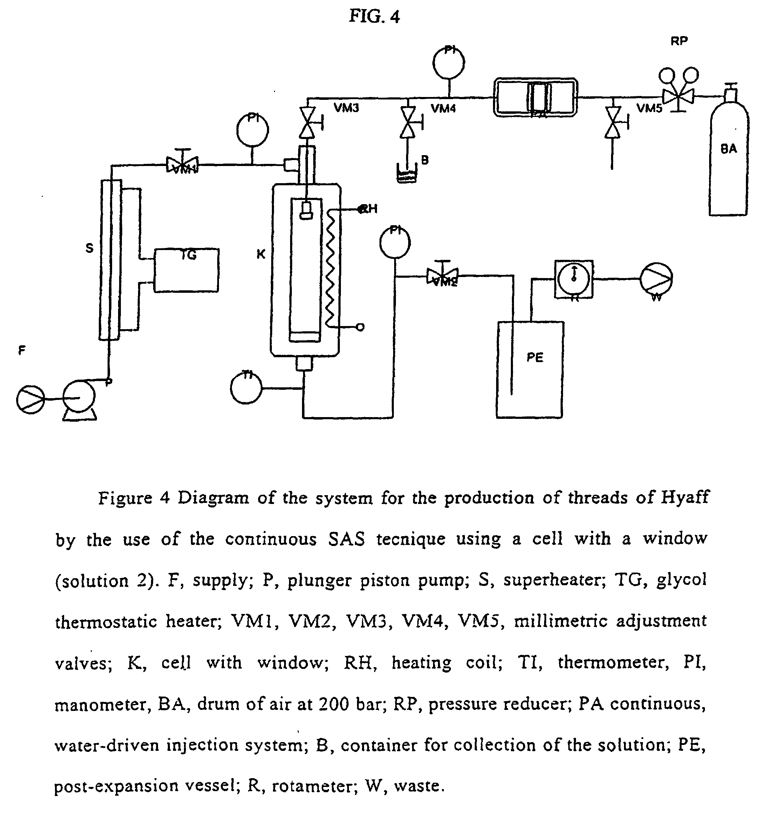

The system is illustrated in the diagram in Figure 4 and is constituted by a supply section (F), a pump with a plunger piston (P) with a glycol-cooled head and a post-expansion and waste section (PE and W) that allows the CO₂ to be separated from the solubilising solvent, for the latter to be harvested and for the gas flow to be measured with the rotameter (R) and to be discharged into the atmosphere.

The precipitation vessel has a window through which the process can be observed.

The injection line of the liquid is composed of an air syringe pump (PA) to guarantee even application of force and to ensure the continuity of the thread.

The system is fitted with a manometer with which it is possible to set the loss of load through the nozzle, working on the pressure reducer (RP) and comparing the pressure reading with that indicated by the manometer connected to the precipitation vessel.

The millimetric valve VM4 (Hoke, model 1316G4Y) connects the pipe with the collection tank (B) during depressurisation and washing of the system.The temperature of the vessel is regulated by monitoring the outlet signal.

### Working procedure

A hyaluronic acid derivative is dissolved in an aprotic solvent, preferably DMSO, at a concentration varying between 5% w/w and the concentration of saturation at a temperature of 40°C, preferably 10% w/w.

The solution is then loaded discontinuosly into the air syringe pump keeping the temperature between 15 and 40°C, preferably 25°C. The pipe line between the pump and the precipitation vessel is filled with pure DMSO so as to inject solvent alone at the beginning of the process and to avoid the system becoming blocked due to the antisolvent effect during the pressurization phase.

The precipitation chambre is pressurized by opening first the millimetric valve VM1 and then operating the plunger piston pump until a final pressure value between 50 and 150 bar, preferably 100 bar, is reached.

Once this value has been reached, the valve VM2 is opened and the flow of CO₂ is stabilised.

The liquid is then compressed with the air-driven pump using the pressure-reducer (RP), until a pressure greater than that of the CO₂ present in the precipitation vessel is reached. The pressure of the liquid must be set at a precise value depending on the diameter of the nozzle.

Injection is begun by switching on valve VM3 thus allowing the liquid to enter into the cell through the calibrated opening, set at between 40 and 400 micron, preferably 100 micron.

Once injection of the solution is complete, the supply of liquid is isolated by means of valve VM3, after which the flow of CO₂ is continued to eliminate any residue solvent.

The process is completed with depressurisation of the precipitator, after which it is possible to disconnect the vessel from the system and harvest the precipitate.

## Claims

1. Biocompatible and biodegradable three-dimensional structures in the form of sponges, gels, fibres, threads, tubes, non-woven fabrics, cords, meshes, containing at least one hyaluronic acid derivative, obtainable by precipitation induced by supercritical antisolvent from a solution of hyaluronic acid derivative in an aprotic solvent at a concentration of between 2% w/w and the saturation value at a temperature of 40°C, said concentration being selected so as to exceed the concentration threshold in which the polymer is present in form of a network structure, optionally in association with pharmacologically or biologically active substances and/or other natural, semisynthetic and synthetic polymers.

2. Three-dimensional structures according to claim 1, wherein the hyaluronic acid derivative is selected in the group consisting of:
- esters of hylauronic acid wherein part or all of the carboxy functions are esterified with alcohols of the aliphatic, aromatic, arylaliphatic, cycloaliphatic, heterocyclic series;
- esters of hyaluronic acid wherein the first part of the carboxy functions is esterified with araliphatic alcohol and the second part with straight, long-chained aliphatic alcohols with between 10 and 22 carbon atoms;
- autocrosslinked esters of hyaluronic acid wherein part or all of the carboxy groups are esterified with the alcoholic functions of the same polysaccharide chain or of other chains;
- crosslinked compounds of hyaluronic acid wherein part or all of the carboxy groups are esterified with polyalcohols of the aliphatic, aromatic, arylaliphtic, cycloaliphatic, heterocyclic series, generating crosslinking by means of spacer chains;
- hemiesters of succinic acid or heavy metal salts of succinic acid with hyaluronic acid or with partial or total esters of hyaluronic acid;
- sulfated or N-sulfated derivatives;
- amide derivatives of hyaluronic acid;

3. Three-dimensional structures according to claims 1-2, wherein the partial ester derivatives of hyaluronic acid have less than 90% esterification, preferably between 45 and 75%, and even more preferably between 60 and 70%.

4. Three-dimensional structures according to claims 1, 2 and 3 wherein the derivatives of hyaluronic acid are esterified with benzyl alcohol.

5. Three-dimensional structures according to claim 1, wherein the natural polymers are selected from the group consisting of collagen, coprecipitates of collagen and glycosaminoglycans, cellulose, polysaccharides in the form of gel such as chitin, chitosan, pectin or pectic acid, agar, agarose, xanthan, gellan, alginic acid or the alginates, polymannan or polyglycans, starch, natural gums.

6. Three-dimensional structures according to claim 1, wherein the semisynthetic polymers are chosen from the group consisting of collagen crosslinked with agents such as aldehydes or precursors of the same, dicarboxylic acids or their halides, diamines, derivatives of cellulose, hyaluronic acid, chitin or chitosan, gellan, xanthan, pectin or pectic acid, polyglycans, polymannan, agar, agarose, natural gum, glycosaminoglycans.

7. Three-dimensional structures according to claim 1, wherein the synthetic polymers are chosen from the group consisting of polylactic acid, polyglycolic acid or copolymers of the same or the derivatives thereof, polydioxanes, polyphosphazenes, polysulphonic resins, polyurethanes, PTFE.

8. Three-dimensional structures according to claim 1, wherein the pharmaceutically or biologically active substances are chosen from the group consisting of anti-inflammatory agents, antibiotics, growth factors such as, for example, BMP, human Nerve Growth Factor (hNGF), Ciliary Neuronotrophic Factor (CNTF).

9. Use of three-dimensional structures according to the previous claims, for the support of cell cultures, in plastic and aesthetic surgery, in orthopaedics, in neurosurgery and cardiovascular surgery, in the prevention of post-surgical adherences, for the regeneration of epidermal, dermal, bone, cartilage, nerve, cardiovascular, adipose, hepatic, muscular, glandular tissues and as a filler for the soft tissues in cases of loss of substance.

10. Discontinuous process for the preparation of sponges containing at least one hyaluronic acid derivative, said process including the following steps:
a) dissolving the hyaluronic acid derivative in an aprotic solvent at a concentration of between 2% w/w and the saturation value at a temperature of 40°C, said concentration being selected so as to exceed the concentration threshold in which the polymer is present in form of a network structure;
b) loading the solution from step a) into a pressure-resistant container;
c) loading the antisolvent until a pressure greater than that of precipitation is reached at a temperature of between 10 and 70°C;
d) removing the aprotic solvent with the flow of antisolvent;
e) depressurising the container and harvesting the precipitate.

11. Continuous process for the preparation of threads containing at least one hyaluronic acid derivative, said process including the following steps:
a) dissolving the hyaluronic acid derivative in an aprotic solvent at a concentration of between 2% w/w and the saturation value at a temperature of 40°C, said concentration being selected so as to exceed the concentration threshold in which the polymer is present in form of a network structure;
b) loading the solution into the thermostatic, pressure-resistant container;
c) loading the antisolvent until a pressure greater than that of precipitation is reached (depending on the organic solvent used and the temperature), at a temperature of between 10 and 70°C and stabilising the flow of antisolvent;
d) injecting continuously the solution of hyaluronic acid derivative into the precipitator through the calibrated opening set at a diameter of between 40 and 400 micron;
e) interrupting injection of the solution;
f) removing any residue solvent with the flow of antisolvent;
g) depressurising the precipitator and harvesting the precipitate.

12. Process according to claims 10 and 11, where the antisolvent is chosen from the group consisting of carbon dioxide, hydrocarbons, hydrofluorocarbons, nitrous oxide.

13. Process according to claims 10 and 12, where the antisolvent is loaded at a speed or pressure gradient of 0.1 to 20 bar/min. till a pressure of 40 to 150 bars is reached.

14. Process according to claims 10-13, wherein the aprotic solvent used in step a) to dissolve the hyaluronic acid derivative is chosen from the group consisting of dimethylsulfoxide, N-methylpyrrolidone, dimethylformamide.

15. Process according to claims 10-14, wherein the hyaluronic acid derivative is chosen from the group consisting of esters of hyaluronic acid, autocrosslinked derivatives of hyaluronic acid or derivatives of hyaluronic acid that are crosslinked by means of spacer chains, hemiesters of succinic acid or heavy metal salts of the hemiester of succinic acid with hyaluronic acid or partial or total esters of hyaluronic acid, sulfated or N-sulfated derivatives, amide derivatives of hyaluronic acid.

16. Process according to claims 10 and 12-15, to prepare sponges containing pharmacologically and biologically active compounds where such compounds are added during step a) after dissolving the hyaluronic acid derivative in the aprotic solvent.

17. Process according to claims 11, 12, 14, and 15 to prepare threads containing pharmacologically and biologically active substances that are added in step a) after dissolving the hyaluronic acid derivative in the aprotic solvent.

## Patentansprüche

1. Biokompatible und biologisch abbaubare dreidimensionale Strukturen in der Form von Schwämmen, Gelen, Fasern, Fäden, Röhren, Vliesstoff-Geweben, Seilen, Netzen, enthaltend mindestens ein Hyaluronsäurederivat, erhältlich durch Fällung, induziert durch ein superkritisches Anti-Lösungsmittel, aus einer Lösung des Hyaluronsäurederivates in einem aprotischen Lösungsmittel bei einer Konzentration zwischen 2 Gew.-% und dem Sättigungswert bei einer Temperatur von 40 °C, wobei die Konzentration so ausgewählt wird, dass sie die Konzentrationsschwelle, bei der das Polymer in Form einer Netzwerkstruktur vorliegt, übersteigt, wahlweise in Assoziierung mit pharmakologisch oder biologisch aktiven Substanzen und/oder anderen natürlichen, halbsynthetischen und synthetischen Polymeren.

2. Dreidimensionale Struktur nach Anspruch 1, worin das Hyaluronsäurederivat ausgewählt wird aus der Gruppe, die besteht aus:
- Estern der Hyaluronsäure, worin ein Teil oder alle Carboxy-Funktlonen mit Alkoholen verestert sind, die aus der Reihe der aliphatischen, aromatischen, arylaliphatischen, cycloaliphatischen, heterocyclischen Alkohole sind;
- Estern der Hyaluronsäure, worin der erste Teil der Carboxy-Funktionen mit araliphatischen Alkoholen verestert ist und der zweite Teil mit gradkettigen langkettigen aliphatischen Alkoholen mit zwischen 10 und 22 Kohlenstoffatomen verestert ist;
- auto-vernetzten Estern der Hyaluronsäure, worin ein Teil oder alle Carboxygruppen verestert sind mit alkoholischen Funktionen der gleichen Polysaccharidkette oder anderer Ketten;
- vernetzten Verbindungen der Hyaluronsäure, worin ein Teil oder alle der Carboxygruppen verestert sind mit Polyalkoholen aus der Reihe der aliphatlschen, aromatischen, arylaliphatischen, cycloaliphatischen, heterocyclischen Alkohole, wobei eine Vernetzung mit Hilfe von Spacer-Ketten gebildet wird;
- Hemiestern der Bernsteinsaure oder Schwermetallsalzen der Bernsteinsäure mit Hyaluronsäure oder mit partiellen oder Gesamtestern von Hyaluronsäure;
- sulfatierten oder N-sulfatierten Derivaten;
- Amid-Derivaten der Hyaluronsäure.

3. Dreidimensionale Strukturen nach den Ansprüchen 1 - 2, worin die Partialesterderivate der Hyaluronsäure weniger als 90 %, bevorzugt zwischen 45 und 75 % und noch bevorzugter zwischen 60 und 70 % Veresterung aufweisen.

4. Dreidimensionale Strukturen nach den Ansprüchen 1, 2 und 3, worin die Derivate der Hyaluronsäure mit Benzylalkohol verestert sind.

5. Dreidimensionale Strukturen nach Anspruch 1, worin die natürlichen Polymere ausgewählt werden aus der Gruppe, die besteht aus: Collagen, Copräzipitaten von Collagen und Glycosaminoglycanen, Cellulose, Polysaccharide in der Form eines Gels, wie Chitin, Chitosan, Pektin oder Pektinsäure, Agar, Agarose, Xanthan, Gellan, Algininsäure oder Alginaten, Polymannan oder Polyglycanen, Stärken, natürlichen Gumen.

6. Dreidimensionale Struktur nach Anspruch 1, worin die halbsynthetischen Polymere ausgewählt werden aus der Gruppe, die besteht aus: Collagen, vernetzt mit Mitteln, wie Aldehyden oder Vorläufern derselben, Dicarbonsäuren oder deren Halogenide, Diaminen, Derivaten der Cellulose, Hyaluronsäure, Chitin oder Chitosan, Gellan, Xanthan, Pektin oder Pektinsäure, Polyglycanen, Polymannan, Agar, Agarose, natürlichen Gumen, Glycosaminoglycanen.

7. Dreidimensionale Struktur nach Anspruch 1, worin die synthetischen Polymere ausgewählt werden aus der Gruppe, die besteht aus: Polymilchsäure, Polyglycolsäure oder Copotymeren derselben oder Derivaten davon, Polydioxan, Polyphosphazenen, Polysulphonsäureharzen, Polyurethanen, PTFE,

8. Dreidimensionale Struktur nach Anspruch 1, worin die pharmazeutischen oder biologisch aktiven Substanzen ausgewählt werden aus der Gruppe, die besteht aus anti-inflammatorischen Mitteln, Antibiotika, Wachstumsfaktoren, wie z. B. BMP, humaner Nervenwachstumsfaktor (hNGF), ziliarneuronotroper Faktor (CNTF).

9. Verwendung der dreidimensionalen Struktur nach einem der vorstehenden Patentansprüche als Träger von Zellkulturen In der plastischen und ästhetischen Chirurgie, in der Orthopädie, in der Neurochirurgle und in der kardiovaskulären Chirurgie, in der Prävention von post-chlrurgischen Anhaftungen, für die Regeneration von Epidermal-, Dermal-, Knochen-, Knorpel-, Nerven-, Kardiovaskulär-, Fett-, Leber-, Muskel-, Glandular-Geweben und als Füller für Weichgewebe im Falle von Substanzverlust.

10. Diskontinuierliches Verfahren für die Herstellung von Schwämmen, die mindestens ein Hyaluronsäurederivat enthalten, wobei das genannte Verfahren die folgenden Schritte einschließt:
a) Lösen eines Hyaluronsäurederivates in einem aprotischen Lösungsmittel bei einer Konzentration von zwischen 2 Gew.-% und dem Sättigungswert bei einer Temperatur von 40 °C, wobei die genannte Konzentration so ausgewählt wird, dass sie den Konzentrationsschwellenwert, bei dem das Polymer in Form von Netzwerkstrukturen vorliegt, übersteigt;
b) Einfüllen der Lösung aus Schritt a) in einen druckbeständigen Behälter;
c) Einfüllen des Anti-Lösungsmittels bis ein Druck, der größer als die Fällung ist, erreicht wird, bei einer Temperatur von zwischen 10 und 70 °C;
d) Entfernen des aprotischen Lösungsmittels mit einem Strom des Anti-Lösungsmittels;
e) Ablassen des Druckes aus dem Behälter und Isolieren des Niederschlags.

11. Kontinuierliches Verfahren für die Herstellung von Fäden, die mindenstens ein Hyaluronsäurederivat enthalten, wobei das genannte Verfahren die folgenden Schritte einschließt:
a) Lösen eines Hyaluronsäurederivates in einem aprotischen Lösungsmittel bei einer Konzentration von zwischen 2 Gew.-% und dem Sättigungswert bei einer Temperatur von 40 °C, wobei die genannte Konzentration so ausgewählt wird, dass sie den Konzentrationssschwellenwert, bei dem das Polymer in Form einer Netzwerkstruktur vorliegt, übersteigt;
b) Einfüllen der Lösung in einen druckbeständigen Thermostat-Behälter;
c) Einfüllen des Anti-Lösungsmittels bis ein Druck erreicht wird, der größer als die Fällung ist (abhängig von dem verwendeten organischen Lösungsmittel und der Temperatur) bei einer Temperatur von zwischen 10 und 70 °C und Stabilisierung des Stroms des Anti-Lösungsmittels;
d) kontinuierliches Injizieren der Lösung des Hyaluronsäurederivates in den Fällungsreaktor durch eine kalibrierte Öffnung, die auf einen Durchmesser von zwischen 40 und 400 Micron eingestellt ist;
e) Unterbrechen der Injektion des Lösung;
f) Entfernung beliebiger rückständiger Lösungsmittel mit dem Strom des Anti-Lösungsmittel;
g) Ablassen des Druckes in dem Fällungsreaktor und Isolieren des Niederschlags.

12. Verfahren nach Ansprüchen 10 und 11, worin das Anti-Lösungsmittel aus der Gruppe ausgewählt wird, die besteht aus: Kohlendioxid, Kohlenwasserstoffen, Hydrogenfluorkohlenstoffen, Stickoxiden.

13. Verfahren nach Ansprüchen 10 und 12, worin das Anti-Lösungsmittel mit einer Geschwindigkeit oder einem Druckgradienten von 0,1 bis 20 Bar/min. eingefüllt wird, bis ein Druck von 40 bis 150 Bar erreicht wird.

14. Verfahren nach Ansprüchen 10 - 13, worin das aprotische Lösungsmittel, das im Schritt a) verwendet wird, um das Hyaluronsäurederivat zu lösen, ausgewählt wird aus der Gruppe, die besteht aus: Dimethylsulfoxid, N-Methylpyrrolidon, Dlmethylformamid.

15. Verfahren nach Ansprüchen 10 - 14, worin das Hyaluronsäurederivat aus der Gruppe ausgewählt wird, die besteht aus: Estern der Hyaluronsäure, autovernetzten Derivaten der Hyaluronsäure oder Derivaten der Hyaluronsäure, die mit Hilfe von Spacer-Ketten vernetzt sind, Hemiestern der Bernsteinsäure oder Schwermetallsalzen der Hemiester der Bernsteinsäure mit Hyaluronsäure oder Partial- oder Total-Estern von Hyaluronsäure, sulfatierten oder N-sulfatierten Derivate, Amid-Derivaten der Hyaluronsäure.

16. Verfahren nach irgendeinem der Ansprüche 10 und 12 - 15, zur Herstellung von Schwämmen, die pharmakologisch und biologisch aktive Verbindungen enthalten, worin diese Verbindungen während dem Schritt a) zugesetzt werden, nach dem Lösen des Hyaluronsäurederivates in dem aprotischen Lösungsmittel.

17. Verfahren nach Ansprüchen 11, 12, 14 und 15, zur Herstellung von Fäden, die pharmakologisch und biologisch aktive Substanzen enthalten, die im Schritt a) nach dem Lösen des Hyaluronsäurederivates in dem aprotischen Lösungsmittel zugesetzt werden.

## Revendications

1. Structures tridimensionnelles biocompatibles et biodégradables sous la formes d'éponges, gels, fibres, fils, tubes, tissus non-tissés, cordes, filets, contenant au moins un dérivé d'acide hyaluronique, pouvant être obtenues par précipitation induite par un antisolvant supercritique à partir d'une solution de dérivé d'acide hyaluronique dans un solvant aprotique à une concentration comprise entre 2 % poids/poids et la valeur de saturation à une température de 40°C, ladite concentration étant choisie de façon à dépasser le seuil de concentration pour lequel le polymère est présent sous forme d'une structure réticulée, éventuellement en association avec des substances présentant une activité pharmacologique ou biologique et/ou d'autres polymères naturels, semi-synthétiques et synthétiques.

2. Structures tridimensionnelles selon la revendication 1, dans lesquelles le dérivé d'acide hyaluronique est choisi dans l'ensemble constitué par :
- les esters d'acide hyaluronique dans lesquels tout ou partie des fonctions carboxy sont estérifiées avec des alcools des séries aliphatique, aromatique, arylaliphatique, cycloaliphatique, hétérocyclique ;
- les esters d'acide hyaluronique dans lesquels une première partie des fonctions carboxy est estérifiée avec un alcool araliphatique et une deuxième partie avec des alcools aliphatiques linéaires à longue chaîne ayant entre 10 et 22 atomes de carbone ;
- les esters autoréticulés d'acide hyaluronique dans lesquels tout ou partie des groupes carboxy sont estérifiés avec les fonctions alcooliques de la même chaîne polysaccharidique ou d'autres chaînes ;
- les composés réticulés d'acide hyaluronique dans lesquels tout ou partie des groupes carboxy sont estérifiés avec des alcools polyvalents des séries aliphatique, aromatique, arylaliphatique, cycloaliphatique, hétérocyclique, la réticulation étant effectuée au moyen de chaînes d'écartement ;
- les hémiesters d'acide succinique ou les sels de métaux lourds et d'acide succinique avec de l'acide hyaluronique ou avec des esters partiels ou totaux d'acide hyaluronique ;
- les dérivés sulfatés ou N-sulfatés ;
- les dérivés amides d'acide hyaluronique.

3. Structures tridimensionnelles selon les revendications 1-2, dans lesquelles les dérivés esters partiels d'acide hyaluronique ont moins de 90 % d'estérification, de préférence entre 45 et 75 %, et mieux encore entre 60 et 70 %.

4. Structures tridimensionnelles selon les revendications 1, 2 et 3, dans lesquelles les dérivés d'acide hyaluronique sont estérifiés avec de l'alcool benzylique.

5. Structures tridimensionnelles selon la revendication 1, dans lesquelles les polymères naturels sont choisis dans l'ensemble constitué par le collagène, les coprécipités de collagène et de glycosaminoglycanes, la cellulose, les polysaccharides sous la forme de gel tels que la chitine, le chitosane, la pectine ou l'acide peçtique, la gélose, l'agarose, le xanthane, le gellane, l'acide alginique ou les alginates, le polymannane ou les polyglycanes, l'amidon, les gommes naturelles.

6. Structures tridimensionnelles selon la revendication 1, dans lesquelles les polymères semi-synthétiques sont choisis dans l'ensemble constitué par le collagène réticulé avec des agents tels que les aldéhydes ou les précurseurs de ceux-ci, les acides dicarboxyliques ou leurs halogénures, les diamines, les dérivés de cellulose, l'acide hyaluronique, la chitine ou le chitosane, le gellane, le xanthane, la pectine ou l'acide pectique, les polyglycanes, le polymannane, la gélose, l'agarose, la gomme naturelle, les glycosaminoglycanes.

7. Structures tridimensionnelles selon la revendication 1, dans lesquelles les polymères synthétiques sont choisis dans l'ensemble constitué par le poly(acide lactique), le poly(acide glycolique) ou les copolymères de ceux-ci ou les dérivés de ceux-ci, les polydioxanes, les polyphosphazènes, les résines polysulfoniques, les polyuréthanes, le PTFE.

8. Structures tridimensionnelles selon la revendication 1, dans lesquelles les substances présentant une activité pharmaceutique ou biologique sont choisies dans l'ensemble constitué par les agents anti-inflammatoires, les anticorps, les facteurs de croissance tels que par exemple le BMP, le facteur de croissance des nerfs humain (hNGF), le facteur neurotrophique ciliaire (CNTF).

9. Utilisation de structures tridimensionnelles selon les revendications précédentes, pour le support de cultures de cellules, en chirurgie plastique et esthétique, en orthopédie, en neurochirurgie et en chirurgie cardiovasculaire, dans la prévention d'adhérences post-chirurgicales, pour la régénération de tissu épidermique, dermique, osseux, cartilagineux, nerveux, cardiovasculaire, adipeux, hépatique, musculaire, glandulaire, et en tant que charge pour les tissus mous dans le cas d'une perte de substance.

10. Procédé discontinu pour la préparation d'éponges contenant au moins un dérivé d'acide hyaluronique, ledit procédé comprenant les étapes suivantes :
a) dissolution du dérivé d'acide hyaluronique dans un solvant aprotique à une concentration comprise entre 2 % poids/poids et la valeur de saturation à une température de 40°C, ladite concentration étant choisie de façon à dépasser le seuil de concentration pour lequel le polymère est présent sous forme d'une structure réticulée ;
b) introduction de la solution provenant de l'étape a) dans un récipient résistant à la pression ;
c) introduction de l'antisolvant jusqu'à ce qu'une pression supérieure à celle de précipitation soit atteinte à une température comprise entre 10 et 70°C ;
d) élimination du solvant aprotique avec le courant d'antisolvant ;
e) dépressurisation du récipient et récolte du précipité.

11. Procédé continu pour la préparation de fils contenant au moins un dérivé d'acide hyaluronique, ledit procédé comprenant les étapes suivantes :
a) dissolution du dérivé d'acide hyaluronique dans un solvant aprotique à une concentration comprise entre 2 % en poids et la valeur de saturation à une température de 40°C, ladite concentration étant choisie de façon à dépasser le seuil de concentration pour lequel le polymère est présent sous forme d'une structure réticulée ;
b) introduction de la solution dans le récipient thermostatique résistant à la pression ;
c) introduction de l'antisolvant jusqu'à ce qu'une pression supérieure à celle de précipitation soit atteinte (dépendant du solvant organique utilisé et de la température), à une température comprise entre 10 et 70°C, et stabilisation du courant d'antisolvant ;
d) injection en continu de la solution de dérivé d'acide hyaluronique dans le précipitateur par l'intermédiaire de l'ouverture calibrée réglée à un diamètre compris entre 40 et 400 micromètres ;
e) interruption de l'injection de la solution ;
f) élimination de tout solvant résiduel avec le courant d'antisolvant ;
g) dépressurisation du précipitateur et récolte du précipité.

12. Procédé selon les revendications 10 et 11, dans lequel l'antisolvant est choisi dans l'ensemble constitué par le dioxyde de carbone, les hydrocarbures, les hydrocarbures fluorés, l'oxyde nitreux.

13. Procédé selon les revendications 10 et 12, dans lequel l'antisolvant est chargé à un gradient de vitesse ou de pression de 0,1 à 20 bar/min, jusqu'à ce qu'une pression de 40 à 150 bars soit atteinte.

14. Procédé selon les revendications 10-13, dans lequel le solvant aprotique utilisé dans l'étape a) pour dissoudre le dérivé d'acide hyaluronique est choisi dans l'ensemble constitué par le diméthylsulfoxyde, la N-méthylpyrrolidone, le diméthylformamide.

15. Procédé selon les revendications 10-14, dans lequel le dérivé d'acide hyaluronique est choisi dans l'ensemble constitué par les esters d'acide hyaluronique, les dérivés autoréticulés d'acide hyaluronique ou les dérivés d'acide hyaluronique qui sont réticulés au moyen de chaînes d'écartement, les hémiesters d'acide succinique ou les sels de métaux lourds de l'hémiester d'acide succinique avec l'acide hyaluronique ou les esters partiels ou totaux d'acide hyaluronique, les dérivés sulfatés ou N-sulfatés, les dérivés amides d'acide hyaluronique.

16. Procédé selon les revendications 10 et 12-15, pour préparer des éponges contenant des composés présentant une activité pharmacologique et biologique, dans lequel ces composés sont ajoutés durant l'étape a) après dissolution du dérivé d'acide hyaluronique dans le solvant aprotique.

17. Procédé selon les revendications 11, 12, 14 et 15 pour préparer des fils contenant des substances présentant une activité pharmacologique et biologique qui sont ajoutées à l'étape a) après dissolution du dérivé d'acide hyaluronique dans le solvant aprotique.
